# EUROPEAN PATENT APPLICATION

(11) **EP 4 560 102 A1**
(43) Date of publication of application: **28.05.2025**
(21) Application number: 23879211.3
(22) Date of filing: 20.10.2023
(51) Int. Cl.: E05F 15/70

(54) **VEHICLE SLIDING DOOR CONTROL SYSTEM, METHOD AND APPARATUS, STORAGE MEDIUM, AND ELECTRONIC DEVICE**

(30) Priority: 21.10.2022 CN 202211295244
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: WU, Haiqin, Ningbo, Zhejiang 315899 (CN); QIAN, Wei, Ningbo, Zhejiang 315899 (CN); ZHANG, Ying, Ningbo, Zhejiang 315899 (CN)
(74) Representative: Dai, Simin
(86) International application number: PCT/CN2023/125681
(87) International publication number: WO 2024/083225

(57) **Abstract**

The present disclosure provides a vehicle sliding door control system, method and apparatus, a storage medium, and an electronic device. The system comprises: a sensing module comprising a plurality of sensors arranged on the outer side of a sliding door of a vehicle and configured to send a first control instruction to a vehicle body domain controller when some of the sensors are triggered sequentially; the vehicle body domain controller configured to send a second control instruction to a sliding door controller according to a locking state of the vehicle in response to receiving the first control instruction; and the sliding door controller configured to receive the second control instruction and execute an opening or closing operation of the sliding door according to the second control instruction.

## Description

### TECHNICAL FIELD

**This** disclosure relates to the field of sliding door control technology, particularly to a control system, a control method, and a control apparatus of a vehicle sliding door, a storage medium, and an electronic device.

### BACKGROUND

Sliding doors are widely used in vehicles due to their convenience in opening and closing. However, currently, the sliding door can only be opened or closed by a user actively pulling an outer handle of the sliding door or pressing a micro-power switch provided on the handle.

### SUMMARY

In view of this, this disclosure provides a control system, a control method, and a control apparatus of a vehicle sliding door, a storage medium, and an electronic device, to at least solve the technical problems existing in the related art.

According to a first aspect of the embodiments of this disclosure, a control system of a vehicle sliding door is provided which includes:
a sensing module, including a plurality of sensors set on an outer side of the vehicle sliding door, where the sensing module is for sending a first control instruction to a vehicle body domain controller in response to some of the sensors being triggered in sequence, and the first control instruction includes an opening instruction or a closing instruction of the sliding door;
the vehicle body domain controller, for, in response to receiving the first control instruction, sending a second control instruction to a sliding door controller based on a locking state of a vehicle, where the second control instruction includes the opening instruction or the closing instruction of the sliding door; and
the sliding door controller, for receiving the second control instruction and performing an opening or a closing operation of the sliding door according to the second control instruction.

In combination with any embodiment of this disclosure, the sensing module is represented by a capacitive switch set on the outer side of the vehicle sliding door, with the plurality of sensors sensors respectively set in a plurality of sensing areas of the capacitive switch.

In combination with any embodiment of this disclosure, the sensing module, when sending the first control instruction to the vehicle body domain controller in response to some of the sensors being triggered in sequence, is specifically for:
in response to some of the sensors being triggered in sequence from front to rear of the vehicle, sending the opening instruction of the sliding door to the vehicle body domain controller; and
in response to some of the sensors being triggered in sequence from the rear to the front of the vehicle, sending the closing instruction of the sliding door to the vehicle body domain controller.

In combination with any embodiment of this disclosure, the vehicle body domain controller is further, when sending the second control instruction to the sliding door controller based on the locking state of the vehicle, specifically for:
when the vehicle is in a locked state, in response to receiving identity confirmation information, controlling the vehicle to be unlocked and sending the second control instruction to the sliding door controller; and
when the vehicle is in an unlocked state, sending the second control instruction to the sliding door controller.

In combination with any embodiment of this disclosure, the system further includes a user identification module;
the vehicle body domain controller is further for sending an identity identification request to the user identification module when the vehicle is in a locked state; and
the user identification module is for receiving the identity identification request and obtaining user identity information, and in response to that the user identity information meets a preset condition, sending identity confirmation information to the vehicle body domain controller.

In combination with any embodiment of this disclosure, the user identification module includes a Bluetooth module, and the Bluetooth module is specifically used for:
receiving the identity identification request and sending a Bluetooth broadcast to a vehicle key; and
in response to establishing a connection between the vehicle key and the Bluetooth module, sending the identity confirmation information to the vehicle body domain controller.

In combination with any embodiment of this disclosure, the system further includes a sound control module;
the sliding door controller is further for sending a sliding door status signal and a first sound request signal to the vehicle body domain controller after receiving the second control instruction, the sliding door status signal representing an opening process or a closing process of the sliding door;
the vehicle body domain controller is further for sending a second sound request signal to the sound control module after receiving the sliding door status signal and the first sound request signal; and
the sound control module is further for controlling a speaker of the vehicle to make a sound according to the second sound request signal.

According to the second aspect of the embodiments of this disclosure, a control method of a vehicle sliding door is provided, applied to a sensing module set on an outer side of the vehicle sliding door, the sensing module including a plurality of sensors, the control method including:
in response to some of the sensors being triggered in sequence, sending a first control instruction to a vehicle body domain controller, wherein the first control instruction comprises an opening instruction or a closing instruction of the sliding door.

According to the third aspect of the embodiments of this disclosure, a control apparatus of a vehicle sliding door is provided, applied to a sensing module set on an outer side of the vehicle sliding door, the sensing module including a plurality of sensors, the control apparatus includes:
an instruction sending module, for, in response to some of the sensors being triggered in sequence, sending a first control instruction to a vehicle body domain controller, wherein the first control instruction comprises an opening instruction or a closing instruction of the sliding door.

According to the fourth aspect of the embodiments of this disclosure, a computer-readable storage medium is provided, storing a computer program therein, where the program implements the operations of the control method described in any embodiment of the first aspect when executed by a processor.

According to the fifth aspect of the embodiments of this disclosure, an electronic device is provided, which includes:
a memory, for storing instructions executable by a processor; and
the processor, for executing the executable instructions in the memory to implement operations of the control method described in any embodiment of the first aspect.

The technical solutions provided by the embodiments of this disclosure can include the following beneficial effects.

By the sensing module, control instructions are sent to the sliding door controller through the vehicle body domain controller when some of the sensors are triggered in sequence, so that the user can complete the opening or closing operation of the sliding door by simply triggering the sensors, thereby enhancing user experience.

It should be understood that a general description and detailed description in the following are for example and explanation, and do not limit this disclosure.

### BRIEF DESCRIPTION OF DRAWINGS

Following drawings are incorporated in and form a part of this specification, showing embodiments in accordance with this disclosure and are used together with the specification to explain principles of this disclosure.
FIG. 1 is a schematic diagram of a control system of a vehicle sliding door according to an example of this disclosure;
FIG. 2 is a schematic diagram of another control system of a vehicle sliding door according to an example of this disclosure;
FIG**.** 3 is a schematic diagram of another control system of a vehicle sliding door according to an example of this disclosure;
FIG. 4 is a schematic diagram of an interactive apparatus according to an example of this disclosure.

### DETAILED DESCRIPTION

Embodiments will be described in detail herein, and examples thereof are represented in the drawings. When the following description involves the drawings, unless otherwise indicated, same numbers in different drawings represent same or similar elements. Implementations described in following examples do not represent all implementations consistent with this disclosure. On the contrary, they are merely examples of apparatuses and methods consistent with some aspects of this disclosure as detailed in attached claims.

Terminology used in this disclosure is for a purpose of describing specific embodiments and is not intended to limit this disclosure. In this disclosure and the appended claims, singular forms of "a", "an" and "the" are intended to include plural forms unless context clearly indicates otherwise. It should also be understood that terms "and/or" as used herein refer to and include any and all possible combinations of one or more associated listed items.

It should be understood that although terms such as first, second, third, etc., are used to describe various information, these terms should not be limited to these terms. These terms are used to distinguish one type of information from another. For example, without departing from a scope of this disclosure, first information can also be referred to as second information, and similarly, the second information can also be referred to as the first information. Depending on the context, the word "if" as used herein can be interpreted as "when", "while" or "in response to determining".

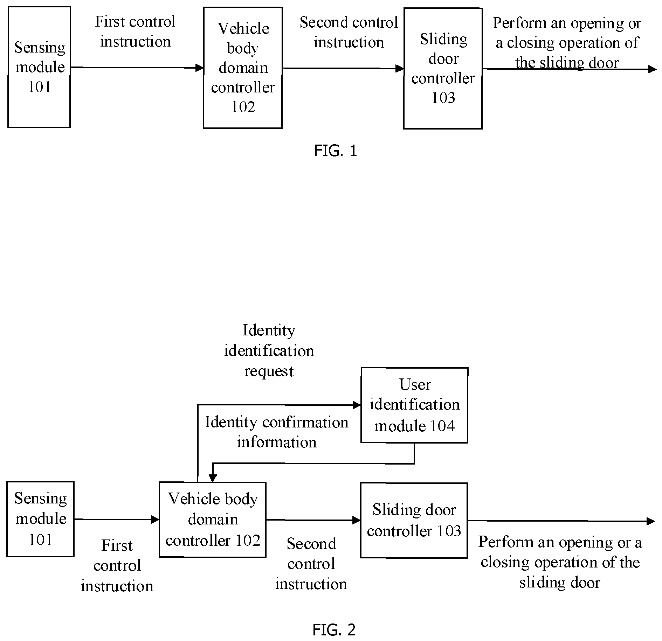

FIG. 1 shows a schematic diagram of a control system of a vehicle sliding door according to an example of this disclosure. As shown in FIG. 1, the system includes a sensing module 101, a vehicle body domain controller 102, and a sliding door controller 103.

The sensing module 101 includes multiple sensors set on an outer side of the vehicle sliding door, and is used to send a first control instruction to the vehicle body domain controller when some of the sensors are triggered in sequence, where the first control instruction includes an opening instruction or a closing instruction of the sliding door. The vehicle body domain controller 102 can be a central processing unit (CPU) or a processor, or any other form as long as the vehicle body domain controller 102 can achieve functions described in the embodiments of this disclosure. This disclosure does not limit a specific implementation form of the vehicle body domain controller 102.

Specifically, the multiple sensors of the sensing module can be set on an outer handle of the vehicle sliding door or near the outer handle, such as on an outer side of the outer handle, so that users outside the vehicle can easily trigger the sensors when they want to perform an opening or a closing operation of the sliding door. The first control instruction includes the opening instruction or the closing instruction of the sliding door, for controlling the vehicle body domain controller to operate and control the sliding door controller to perform specific door opening and closing operations.

By sending the first control instruction to the vehicle body domain controller when some of the sensors are triggered in sequence, it can prevent a mis-trigger of the first control instruction when the user unintendedly touch the sensors by grasping the outer handle of the sliding door or other ways.

Preferably, the sensing module is represented by a capacitive switch set on the outer side of the vehicle sliding door, with multiple sensors respectively set in multiple sensing areas of the capacitive switch. When a user touches or approaches the capacitive switch, it is determined that a corresponding sensing area of the capacitive switch is triggered. In an example, the capacitive switch includes 4 sensing areas, and the first control instruction is sent when the user triggers 3 or more sensing areas in sequence, so that the user can simply perform a "swing" and other gesture operations in the area where the sensing module is located to trigger the sensing module so as to send the first control instruction.

The vehicle body domain controller 102 is used to receive the control instruction and send a second control instruction to the sliding door controller based on a locking state of the vehicle, where the second control instruction includes the opening instruction or the closing instruction of the sliding door.

Usually, the vehicle body domain controller is mainly responsible for a door lock system of an entire vehicle, interior and exterior lighting system, air conditioning system, alarm system of security and anti-theft, sunroof sunshade system, and vehicle mode management. In the scheme described herein, the vehicle body domain controller is also used to send the second control instruction to the sliding door controller based on the locking state of the vehicle (e.g., a locked state or unlocked state) after receiving the first control instruction, ensuring that the vehicle cannot be unlocked and the sliding door cannot be controlled to open by non-vehicle users when the vehicle is locked.

In an example, when the first control instruction represents the opening instruction of the sliding door, the second control instruction is used to control the sliding door controller to perform the opening operation of the sliding door; when the first control instruction represents the closing instruction of the sliding door, the second control instruction is used to control the sliding door controller to perform the closing operation of the sliding door.

In an example, sending the second control instruction to the sliding door controller based on the locking state of the vehicle includes:
when the vehicle is in the locked state, in response to receiving identity confirmation information, controlling the vehicle to be unlocked and sending the second control instruction to the sliding door controller; and
when the vehicle is in the unlocked state, sending the second control instruction to the sliding door controller.

Specifically, in case that the vehicle is locked, the vehicle body domain controller controls the vehicle to be unlocked and sends the second control instruction to the sliding door controller only when the vehicle body domain controller receives the identity confirmation information. For example, when the vehicle body domain controller determines that a current user triggering the sensing module is a vehicle user, the vehicle body domain controller controls the vehicle to be unlocked and sends the second control instruction to the sliding door controller.

When the vehicle is unlocked, the vehicle body domain controller does not need to unlock the vehicle and can directly send the second control instruction to the sliding door controller.

The sliding door controller 103 is used to receive the second control instruction and perform the opening or closing operation of the sliding door according to the second control instruction.

Specifically, the sliding door controller is responsible for performing the opening or closing operation of the vehicle sliding door, and the vehicle sliding door includes a sliding rail structure and control motor. In an example, the second control instruction also includes an electric release signal. When the sliding door is fully closed or fully opened, the sliding door controller releases a limit of the sliding door (the limit is used to lock or fix the sliding door) in response to receiving the electric release signal and performs a corresponding operation according to the opening or closing instruction of the sliding door in the second control instruction; when the sliding door is not fully opened or fully closed, the sliding door controller can directly perform the corresponding operation according to the opening or closing instruction of the sliding door in the second control instruction.

In the scheme described in this disclosure, the sensing module sends the control instruction to the sliding door controller through the vehicle body domain controller when some of the sensors are triggered in sequence, so that the user can complete the opening or closing operation of the sliding door by simply triggering the sensors, thereby enhancing the user experience.

In an optional embodiment, the sensing module is, when some of the sensors are triggered in sequence and the first control instruction is sent to the vehicle body domain controller, specifically used for:
in response to some of the sensors being triggered in sequence from front to rear of the vehicle, sending the opening instruction of the sliding door to the vehicle body domain controller; and
in response to some of the sensors being triggered in sequence from the rear to the front of the vehicle, sending the closing instruction of the sliding door to the vehicle body domain controller.

Specifically, it is assumed that during a process of opening the sliding door, a sliding direction of the sliding door is from the front to the rear of the vehicle, and during the process of closing the sliding door, the sliding direction of the sliding door is from the rear to the front of the vehicle. Accordingly, the control instruction can be sent to the vehicle body domain controller according to the triggering direction of the sensor. This is just an example, and the opening and closing direction of the sliding door can also be set to be opposite to this direction.

In the scheme described in this disclosure, by synchronizing the triggering direction of the sensors with the user's habit of opening or closing the sliding door, the user experience can be further enhanced and the mis-triggering of the sensing module can be avoided.

FIG. 2 shows a schematic diagram of a control system of a vehicle sliding door according to an example of this disclosure. As shown in FIG. 2, the system includes a user identification module 104.

The vehicle body domain controller 102 is also used to send an identity identification request to the user identification module when the vehicle is in the locked state.

Specifically, when the vehicle is locked, in response to receiving the first control instruction, the vehicle body domain controller can also control the user identification module to confirm an identity of the current user, ensuring that the vehicle will not be unlocked and controlled to open the sliding door by non-vehicle users when the vehicle is locked.

The user identification module 104 is used to receive the identity identification request and determine identity information of the user;
in response to that the identity information of the user meets a preset condition, send identity confirmation information to the vehicle body domain controller.

Specifically, the user identification module can determine whether the current user is the vehicle user based on the identity information of the user.

In a preferred embodiment, the user identification module includes a Bluetooth module, which is used for: receiving the identity identification request and sending a Bluetooth broadcast to a vehicle key of the user;
in response to establishing a connection between the vehicle key and the Bluetooth module, sending identity confirmation information to the vehicle body domain controller.

The Bluetooth module can determine the identity of the user by determining whether the Bluetooth module can establish the connection with the vehicle key. After receiving the identity identification request, the Bluetooth module searches for the vehicle key through the Bluetooth broadcast.

When the current user carries the vehicle key, the Bluetooth module can establish the connection with the vehicle key, which indicates that the current user is the vehicle user. And the Bluetooth module sends the identity confirmation information to the vehicle body domain controller to control the vehicle to be unlocked, to achieve keyless entry functionality of the vehicle based on the Bluetooth module.

When the current user does not carry the vehicle key, the Bluetooth module cannot establish the connection with the vehicle key, which indicates that the current user is not the vehicle user. And the Bluetooth module does not send the identity confirmation information to the vehicle body domain controller, so that even if a non-vehicle user successfully makes the sensing module send the first control instruction, the vehicle sliding door cannot be opened.

In addition to the Bluetooth module in the embodiment above, the user identification module can also determine the identity information of the user through a face recognition module, a fingerprint recognition module, or a voiceprint recognition module, etc., which is not limited by this disclosure. The user identification module can be any electronic circuit, chip, separate or integrated device that supports the Bluetooth technology, the face recognition technology, the fingerprint recognition technology, the voiceprint recognition technology, etc., of which specific implementation form is not limited by this disclosure.

In the scheme described in this disclosure, by determining the identity information of the user through the user identification module, it is ensured that the vehicle sliding door is not opened by non-vehicle users, enhancing security of the vehicle. In addition, when the user identification module includes the Bluetooth module, the user identification module can send the identity confirmation information when the Bluetooth module connects with the vehicle key, allowing users to experience the keyless entry functionality of the vehicle sliding door.

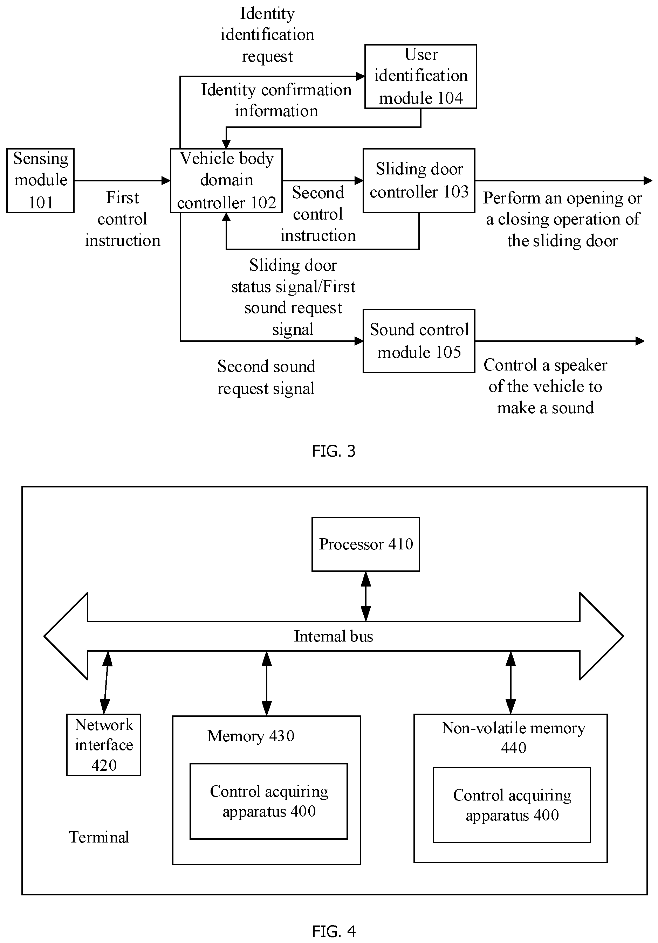

FIG. 3 shows a schematic diagram of a control system of a vehicle sliding door according to an example of this disclosure. As shown in FIG. 3, the system also includes a sound control module 105.

The sliding door controller 103 is also used to send a sliding door status signal and a first sound request signal to the vehicle body domain controller after receiving the second control instruction.

The first sound request signal is used to request the vehicle body domain controller to play preset chord music through the sound control module during an opening or closing process of the sliding door, further enhancing the user experience, and the sliding door status signal represents the opening or closing process of the sliding door.

The vehicle body domain controller 102 is also used to send a second sound request signal to the sound control module after receiving the sliding door status signal and the first sound request signal.

Specifically, the vehicle body domain controller can determine a current status of the sliding door (e.g., the sliding door is in the opening or closing process) according to the sliding door status signal, and send the second sound request signal to the sound control module to control a sound playback module to perform a corresponding audio playback function and play an audio corresponding to the second sound request signal. The sound control module may adopt any structure that can perform operations such as speaker control and audio playback, as long as the sound control module can achieve the functions described in the embodiments of this disclosure, of which specific implementation structure is not limited by this disclosure.

In an example, users can preset a type of the audio in advance through an in-vehicle interaction system, so that the vehicle body domain controller can control the sound playback module to play the preset audio through the second sound request signal, enhancing the user's personalized experience.

The sound control module 105 is used to control a speaker of the vehicle to make a sound according to the second sound request signal.

In an example, multiple high, mid, and low frequency speakers as well as surround sound speakers can be set inside the vehicle or on a frame of the sliding door, providing users with a rich and three-dimensional auditory experience during a process of the sound control module controlling the speakers to make a sound.

In the scheme described in this disclosure, the sound playback module controls the speakers to play preset audio information during the opening or closing process of the vehicle sliding door, which allows users to receive chord music from the speakers of the vehicle while waiting for the sliding door to open or close, further enhancing the user experience.

In addition, this disclosure also provides a control method of a vehicle sliding door, applied to the sensing module set on the outer side of the vehicle sliding door, the sensing module includes multiple sensors, and the method includes:

in response to some of the sensors being triggered in sequence, sending the first control instruction to the vehicle body domain controller, where the first control instruction includes the opening instruction or the closing instruction of the sliding door.

For the sake of simplicity in description, the method embodiments described above are all represented as a series of action combinations, but those skilled in the art should know that this disclosure is not limited to the described order of actions. Because according to this disclosure, some steps can be carried out in other orders or simultaneously.

Secondly, those skilled in the art should also know that the embodiments described in the specification are all optional, and the actions and modules involved are not necessarily required by this disclosure.

Corresponding to the above-mentioned embodiments of the system of realizing application functions, this disclosure also provides embodiments of an apparatus of realizing application functions and a corresponding terminal.

This disclosure also provides a control apparatus of a vehicle sliding door, applied to the sensing module set on the outer side of the vehicle sliding door, the sensing module includes multiple sensors, and the apparatus includes:
an instruction sending module, used for: in response to some of the sensors being triggered in sequence, sending the first control instruction to the vehicle body domain controller, where the first control instruction includes the opening instruction or the closing instruction of the sliding door.

For an apparatus embodiment, since it basically corresponds to a method embodiment, the relevant parts refer to the description of the method embodiment. The above-described apparatus embodiment is merely for example, and units described as separate parts can be or cannot be physically separate, and parts displayed as units can be or cannot be physical units. For example, they can be located in one place, or they can also be distributed across multiple network units. Some or all of the modules can be selected according to actual needs to achieve the purpose of this disclosure. Those skilled in the art can understand and implement the scheme of this disclosure without creative effort.

Corresponding to the above-mentioned method embodiments, this specification also provides embodiments of the apparatus and the terminal to which the apparatus is applied.

The embodiment of the apparatus in this specification can be applied to computer equipment, such as servers or terminal devices. The apparatus embodiment can be implemented by software, hardware, or a combination of software and hardware. Taking the software implementation as an example, as a logical apparatus, the software implementation is formed by a file processor reading the corresponding computer program instructions from the non-volatile memory into a memory for execution. From a hardware perspective, FIG. 4 is a hardware structure diagram of a computer equipment where the apparatus of the embodiment in this specification is located. In addition to the processor 410, memory 430, network interface 420, and non-volatile memory 440 shown in FIG. 4, a server or electronic device where the apparatus of the embodiment is located usually includes other hardware according to actual functions of the computer equipment, which is not described in detail.

Those skilled in the art, considering the specification and the disclosure made here, will easily think of other implementations of this disclosure. The scope of this disclosure is intended to cover any variations, uses, or adaptive changes of this disclosure, which follow the general principles of this disclosure and include common knowledge or conventional technical means in this technical field that are not disclosed in this disclosure. The specification and examples are only for example, and the true scope and spirit of this disclosure are indicated by the claims below.

It should be understood that this disclosure is not limited to the precise structures described and shown in the drawings above, and various modifications and changes can be made without departing from its scope. The scope of this disclosure is only limited by the claims appended thereto.

## Claims

1. A control system of a vehicle sliding door, comprising:
a sensing module, comprising a plurality of sensors set on an outer side of the vehicle sliding door, wherein the sensing module is for sending a first control instruction to a vehicle body domain controller in response to some of the sensors being triggered in sequence, and the first control instruction comprises an opening instruction or a closing instruction of the sliding door;
the vehicle body domain controller, for, in response to receiving the first control instruction, sending a second control instruction to a sliding door controller based on a locking state of a vehicle, wherein the second control instruction comprises the opening instruction or the closing instruction of the sliding door; and
the sliding door controller, for receiving the second control instruction and performing an opening or a closing operation of the sliding door according to the second control instruction.

2. The control system according to claim 1, wherein the sensing module is represented by a capacitive switch set on the outer side of the vehicle sliding door, with the plurality of sensors respectively set in a plurality of sensing areas of the capacitive switch.

3. The control system according to claim 1, wherein the sensing module, when sending the first control instruction to the vehicle body domain controller in response to some of the sensors being triggered in sequence, is specifically for:
in response to some of the sensors being triggered in sequence from front to rear of the vehicle, sending the opening instruction of the sliding door to the vehicle body domain controller; and
in response to some of the sensors being triggered in sequence from the rear to the front of the vehicle, sending the closing instruction of the sliding door to the vehicle body domain controller.

4. The control system according to claim 1, wherein the vehicle body domain controller is further, when sending the second control instruction to the sliding door controller based on the locking state of the vehicle, specifically for:
when the vehicle is in a locked state, in response to receiving identity confirmation information, controlling the vehicle to be unlocked and sending the second control instruction to the sliding door controller; and
when the vehicle is in an unlocked state, sending the second control instruction to the sliding door controller.

5. The control system according to claim 1, further comprising a user identification module;
wherein the vehicle body domain controller is further for sending an identity identification request to the user identification module when the vehicle is in a locked state; and
the user identification module is for receiving the identity identification request and obtaining user identity information, and in response to that the user identity information meets a preset condition, sending identity confirmation information to the vehicle body domain controller.

6. The control system according to claim 5, wherein the user identification module comprises a Bluetooth module, and the Bluetooth module is specifically for:
receiving the identity identification request and sending a Bluetooth broadcast to a vehicle key; and
in response to establishing a connection between the vehicle key and the Bluetooth module, sending the identity confirmation information to the vehicle body domain controller.

7. The control system according to claim 1, further comprising a sound control module;
wherein the sliding door controller is further for sending a sliding door status signal and a first sound request signal to the vehicle body domain controller after receiving the second control instruction, the sliding door status signal representing an opening process or a closing process of the sliding door;
the vehicle body domain controller is further for sending a second sound request signal to the sound control module after receiving the sliding door status signal and the first sound request signal; and
the sound control module is further for controlling a speaker of the vehicle to make a sound according to the second sound request signal.

8. A control method of a vehicle sliding door, applied to a sensing module set on an outer side of the vehicle sliding door, the sensing module comprising a plurality of sensors, the control method comprising:
in response to some of the sensors being triggered in sequence, sending a first control instruction to a vehicle body domain controller, wherein the first control instruction comprises an opening instruction or a closing instruction of the sliding door.

9. A control apparatus of a vehicle sliding door, applied to a sensing module set on an outer side of the vehicle sliding door, the sensing module comprising a plurality of sensors, the control apparatus comprising:
an instruction sending module, for, in response to some of the sensors being triggered in sequence, sending a first control instruction to a vehicle body domain controller, wherein the first control instruction comprises an opening instruction or a closing instruction of the sliding door.

10. A computer-readable storage medium, storing a computer program therein, wherein the program implements operations of the control method according to claim 8 when executed by a processor.

11. An electronic device, comprising:
a memory, for storing instructions executable by a processor; and
the processor, for executing the executable instructions in the memory to implement operations of the control method according to claim 8.
